# EUROPEAN PATENT SPECIFICATION

(11) **EP 0 848 588 B1**
(45) Date of publication and mention of the grant of the patent: **24.10.2001**
(21) Application number: 97929567.2
(22) Date of filing: 01.07.1997
(51) Int. Cl.: A01J 5/017, A01K 1/12

(54) **AN IMPLEMENT FOR AUTOMATICALLY MILKING ANIMALS**
VORRICHTUNG ZUM AUTOMATISCHEN MELKEN VON TIEREN
INSTALLATION DE TRAITE AUTOMATIQUE D'ANIMAUX

(30) Priority: 05.07.1996 EP 96201881
(43) Date of publication of application: 24.06.1998
(60) Divisional application: 01100039.5
(73) Proprietor: MAASLAND N.V., 3155 PD Maasland (NL)
(72) Inventor: VAN DEN BERG, Karel, NL-2971 BR Bleskensgraaf (NL); FRANSEN, René, NL-3135 ZD Vlaardingen (NL)
(74) Representative: Corten, Maurice Jean F.M.
(86) International application number: PCT/NL97/00370
(87) International publication number: WO 98/01022

(56) References cited:
- EP-A- 0 213 660
- EP-A- 0 313 109
- EP-A- 0 519 544
- EP-A- 0 630 558
- EP-A- 0 689 762
- DATABASE WPI Section PQ, Week 8950 Derwent Publications Ltd., London, GB; Class P13, AN 89-369035 XP002041890 & SU 1 484 333 A (N-CAUC CATTLE RES I) , 7 June 1989

## Description

The present invention relates to an implement for automatically milking animals, such as cows, according to the preamble of claim 1.

Such an implement is known, for example from EP-A-0 313 109.

The invention aims at simplifying the milk unit construction.

In accordance with the invention, for that purpose, the implement described in the preamble is characterized according to the characterizing portion of claim 1. In relation to the known implement it will thus be possible to reduce the number of degrees in the robot arm construction by one. Besides the means for moving the entire robot arm construction in the longitudinal direction of the milk box, it will suffice to provide control cylinders for pivoting the robot arm and moving same in height. By performing a pivoting movement from the side of the milk box there will moreover be obtained the advantage that the robot arm can be adjusted into a position enabling to connect, in a reliable manner, the teat cups to teats of the animal that are directed somewhat outwardly.

In accordance with the invention, it is possible to move the robot arm construction in the longitudinal direction of the milk box by providing the robot arm construction with a supporting unit movable along one or more rails in the longitudinal direction of the milk box, relative to which supporting unit the pivotable portion of the robot arm construction is pivotable in sideward direction. In that case the supporting unit may be designed so as to be movable along the rails by means of a motor. The sideward pivoting movement can be achieved by means of a control cylinder which is active between the supporting unit and the pivotable portion of the robot arm construction. By designing the pivotable portion of the robot arm construction as a carrier extending substantially downwardly to which the robot arm is coupled, it is possible to achieve the movability in height of the robot arm. In a particular embodiment, parallel to the control cylinder enabling the movability in height of the robot arm, there may be provided one or more guide rods for counteracting a rotating movement of the robot arm relative to the carrier.

Although the pivotal axis may constitute the centre line of a material axis about which the robot arm is capable of pivoting actually, it is possible to achieve an embodiment of the robot arm construction in which said pivotal axis is a virtual one. According to the invention, the robot arm construction is then provided with a supporting unit movable in the longitudinal direction of the milk box along at least one rail, as well as a quadrangle hinge construction by means of which the pivotable portion of the robot arm construction is pivotable sidewardly relative to the supporting unit.

In order to be able to perform a suitable sideward pivoting movement of the robot arm, the pivotal axis for the robot arm is preferably located approximately in the middle above the milk box. However, in particular when there are provided two milk boxes arranged side by side, it may be desirable to dispose the pivotal axis for the robot arm at the upper sides of the milk boxes or near thereto and between them. In that case it is possible to arrange one robot arm construction for both milk boxes. To that end there may be provided in particular pivoting means for pivoting at least part of the sidewardly pivotable portion of the robot arm construction around the centre line of the downwardly extending portion of the robot arm construction.

Besides two milk boxes arranged side by side in longitudinal direction, there may also be provided several milk boxes arranged behind each other; in that case, the rail for the robot arm construction will extend along these milk boxes or thereabove. Finally it is noticed that the milk boxes may be arranged in a carrousel, the rail of the robot arm construction then extending in a circle along the carrousel or thereabove.

For a better understanding of the invention, reference will now be made to the accompanying drawings, in which:
Figure 1 shows a side view of a robot arm construction in accordance with the invention;
Figure 2 is a front view of a milk box in which the robot arm construction of Figure 1 is shown schematically;
Figure 3 shows an other embodiment of such a robot arm construction in which the pivotal axis is a virtual one, and
Figure 4 is a front view of two milk boxes between which there is pivotably disposed a robot arm construction in again an other embodiment according to the invention.

In the drawings corresponding parts are designated by the same reference numerals.

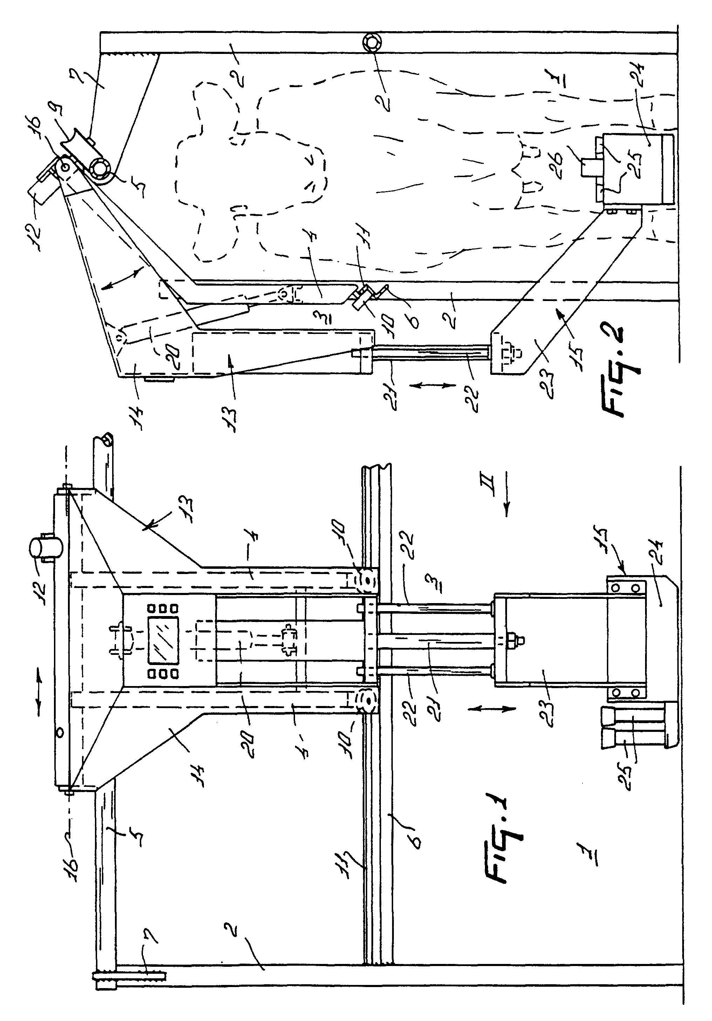

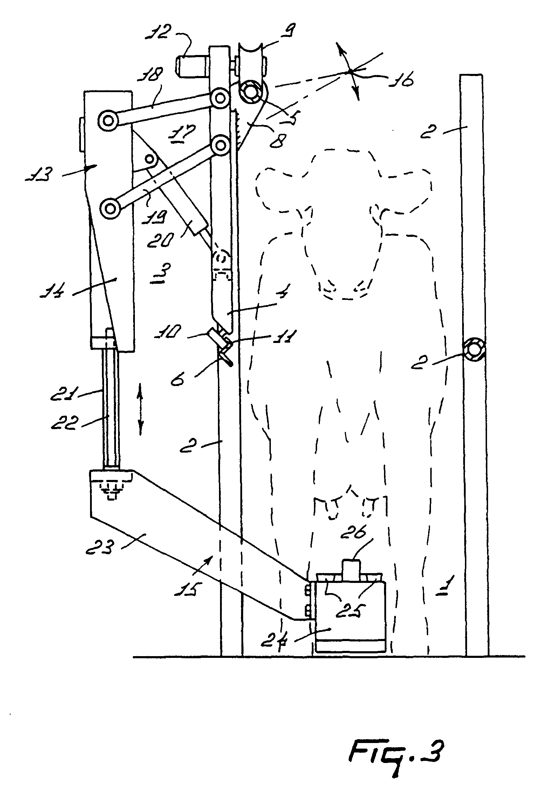

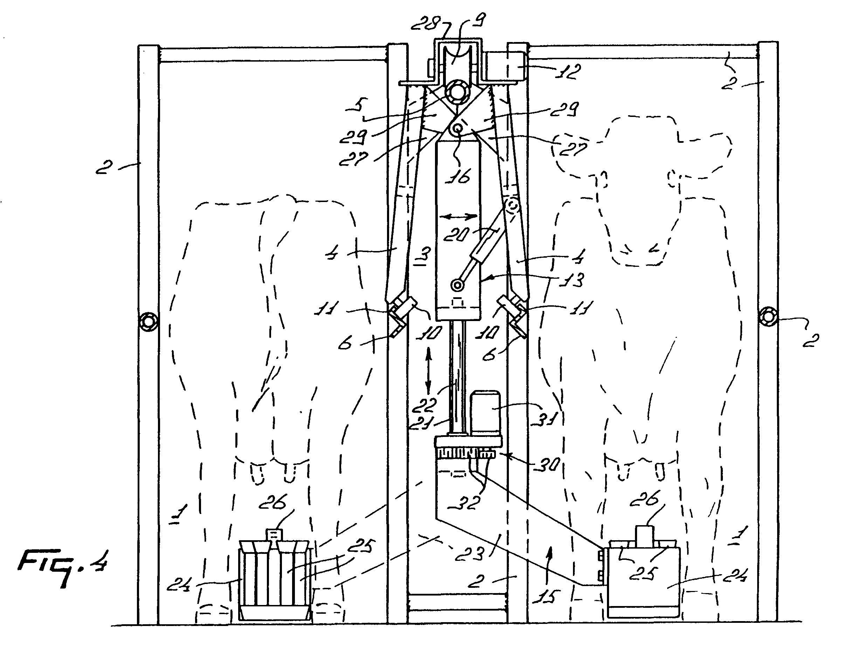

The milk box 1 shown in Figures 1 to 3 accommodates one single animal. Said milk box is surrounded in a customary manner by a fencing 2 and provided with a (non-shown) entrance and exit door. In the milk box and in the immediate vicinity thereof there is provided an automatic milking machine which, besides the usual milking equipment, includes a milking robot for automatically connecting teat cups to the teats of an animal to be milked which is present in the milk box, automatically milking said animal and automatically disconnecting the teat cups from the teats. The milking robot comprises a robot arm construction 3 movable in the longitudinal direction of the milk box 1. Said robot arm construction is provided with a supporting unit 4 which is movable along rails 5 and 6. In the embodiment of Figures 1 and 2, the rail 5 is tubular and disposed in the middle above the milk box 1 in the longitudinal direction thereof by means of supports 7 attached to the fencing 2. In the embodiment of Figure 3, the rail 5 is also tubular but disposed on the side of the upper side of the milk box 1 in the longitudinal direction thereof by means of supports 8 attached to the fencing 2 at the longitudinal side of the milk box where the robot arm construction is located. In both embodiments, the rail 6 is disposed approximately half-way the height of the milk box at the longitudinal side of the fencing 2, i.e. at the side where the robot arm construction is located. The rail 6 is constituted by an angle section whose abutment face over which the supporting unit 4 can be moved is located at an angle of approximately 45° obliquely downwards and outwards relative to the milk box 1. Both at its upper side and its under side the supporting unit 4 is provided with rollers 9 and 10. In the embodiment of Figures 1 and 2, the rollers 9 and 10 are attached to the supporting unit 4 perpendicularly to each other and at an angle of approximately 45° relative to a vertical plane in the longitudinal direction of the milk box, in such a manner that the supporting unit 4 is supported on the rail 5 by means of the rollers 9 and on the rail 6 by means of the rollers 10. In order to prevent the supporting unit 4 from being pushed from the rails 5 and 6, there are provided locking means, e.g. constituted by an upright edge 11 provided on the rail 6 or constituted by additional (non-shown) rollers, also attached to the supporting unit 4 and arranged diametrically opposite the rollers 9 relative to the rail 5, the rail 5 thus extending between the rollers. The supporting unit 4 is capable of being moved along the rails 5 and 6 by means of a motor 12.

The robot arm construction is furthermore provided with a sidewardly pivotable portion 13 comprising a carrier 14 extending substantially downwardly and a robot arm 15 attached thereto. The sidewardly pivotable portion 13 and consequently also the robot arm 15 are pivotable about a substantially horizontal pivotal axis 16 which is located at the upper side of the milk box or near thereto in the longitudinal direction thereof. Although, in the embodiment of Figures 1 and 2 as well as in the embodiment of Figure 3 the pivotal axis 16 is located approximately in the middle above the milk box, in the embodiment of Figures 1 and 2 said pivotal axis constitutes the centre line of the material pivotal axis for the sidewardly pivotable portion 13, while in the embodiment of Figure 3 said pivotal axis is a virtual one which, moreover, during the pivoting movement of the sidewardly pivotable portion 13, moves upwardly. In the embodiment of Figures 1 and 2, the pivotal axis 16 and the centre line of the rail 5 are located in a substantially vertical plane. In the embodiment of Figure 3, the sidewardly pivotable portion 13 is connected with the supporting unit 4 by means of a quadrangle hinge construction 17, composed of arms 18 and 19, the distance between the hinge points of said arms on the carrier 14 being larger than the distance between the hinge points of these arms on the supporting unit 4.

In the two embodiments described so far, the sideward pivoting movement of the portion 13 is achieved by means of a control cylinder 20 which is disposed between said pivotable portion 13 and the supporting unit 4. As already mentioned, the sidewardly pivotable portion 13 comprises the carrier 14 and the robot arm 15. The robot arm 15 is connected movably in height with the carrier 14 by means of a control cylinder 21. Parallel to this control cylinder 21 there are provided one or more guide rods 22 for counteracting a rotating movement of the robot arm 15 about an axis in the longitudinal direction of the control cylinder 21 relative to the carrier 14.

The robot arm 15 comprises a portion 23 extending obliquely downwards in the direction of the milk box and a portion 24 extending horizontally. The latter portion 24 may be produced as the end piece of the robot arm construction as described in EP-A-O 360 354 or in EP-A-O 519 544, the description of this end piece as well as its function being considered to be inserted here. Said end piece is adapted to serve as a carrier for the teat cups 25 and for the detector 26 by means of which the position of the teats can be determined.

In order to make it possible for an animal to enter the milk box 1 without damaging the milking robot, the sidewardly pivotable portion 13 of the robot arm construction is pivotable outwardly to such an extent that the robot arm 15 is located almost entirely outside the milk box 1. When an animal is present in the milk box and the teat cups 25 have to be connected, the robot arm construction 3 has first to be moved by means of the motor 12 in the longitudinal direction of the milk box to such an extent, i.e. into a position in which the robot arm 15 has pivoted entirely or almost entirely outside the milk box, that, by means of the control cylinder 20, the robot arm 15 can be pivoted under the animal into a position in which the detector 26 is capable of determining the position of the teats. By subsequently operating the motor 12 and the control cylinders 20 and 21, it will be possible to connect the teat cups 25 to the teats. After milking, the teat cups may be disconnected from the teats in the way described in the aforementioned EP-A-O 360 354. When adjusting a teat cup into the right position for connecting same to a relevant teat, the pivotability of the robot arm 15 about the pivotal axis 16 may be of great advantage when the teats of the animal are directed somewhat outwardly; a situation which occurs in particular when relatively much time has elapsed since the previous milking run.

Figure 4 shows an embodiment in which there are provided two milk boxes arranged side by side, while the robot arm construction 3 is located in the space between the two milk boxes. The upper rail 5 along which the robot arm construction 3 is movable in the longitudinal direction of the milk boxes is attached by means of supports 27 to the fencing 2 of the two milk boxes, more in particular in the middle between said milk boxes. In this case the supporting unit 4 is composed of two portions which are connected to each other by means of a connecting element 28 in which the rollers 9 are bearing-supported. By means of the rollers 9 the two portions of the supporting unit 4 bear on the rail 5. Each of the two portions of the supporting unit 4 is provided at its lower side with rollers 10, while each of the portions of the supporting unit 4 is supported in the same manner as in the embodiments shown in Figures 1 to 3. The pivotable portion 13 is capable of pivoting sidewardly to a limited extent towards both milk boxes by means of the control cylinder 20 which, also in this case, is disposed between said sidewardly pivotable portion 13 and the supporting unit 4. The pivotal axis 16 is then located under the rail 5. The carrier 14 is pivotable about the pivotal axis 16 relative to the supporting unit 4 by means of supports 29 attached to said supporting unit 4, at the ends of which supports 29 the material pivotal axis extends; also in this case the pivotal axis 16 constitutes the centre line of the material pivotal axis. In this embodiment, the robot arm 15 is indeed connected movably in height with the carrier 14 by means of the control cylinder 21, but in this case the robot arm is also rotatable around the centre line of said control cylinder with the aid of pivoting means 30. In this case, the pivoting means 30 are constituted by a motor 31 and transmission means, such as gear wheels 32. When moving the robot arm construction in the longitudinal direction of the milk boxes, it is difficult to pivot the robot arm 15 sidewardly outside the two milk boxes, unless the space between the two milk boxes is relatively large. A rotative construction in which the robot arm 15 can be adjusted into an intermediate position, i.e. a position in which the portion 23 of the robot arm extends in the space between the two milk boxes, and into an operative position in the two milk boxes, offers the possibility to use one and the same robot arm construction 3 for both milk boxes and to keep the space between the milk boxes relatively small. However, because of the construction of the horizontal portion 24 of the robot arm 15, the two milk boxes have to be entered in opposite directions. The use of two milk boxes in the manner as described with reference to the embodiment shown in Figure 4 enables to milk an animal in one milk box, while in the other milk box the teats of the animal are already cleaned so that, when the milking of an animal in one milk box has finished, the milking of the animal in the other milk box can start immediately.

Instead of arranging two milk boxes side by side, it is also possible to arrange two or more milk boxes behind each other. In that situation, the entrance and the exit of the milk boxes have to be disposed at the longitudinal side facing the one where the robot arm construction is located. In that case, the rails 5 and 6 for the robot arm construction 3 have to extend along all these milk boxes or thereabove, so that the robot arm construction can be moved along one and the same rail from a position at the side of a milk box located therebehind or in front thereof into an other position at the side of an other milk box located therebehind or in front thereof. It is also possible to arrange the milk boxes in a circle or in a carrousel. In that situation, the rails 5 and 6 along which the robot arm construction is then movable have to extend along the circle or carrousel or thereabove.

Finally it is noticed that the milking robot comprises a computer for controlling the automatic connection of the teat cups, the automatic milking of the animals and the automatic disconnection of the teat cups after milking. In particular the above-described possibilities of movement of the robot arm 15 of the robot arm construction 3 are under control of the computer; in other words, the motors 12 and 31 and the control cylinders 20 and 21 are computer-controlled.

## Claims

1. An implement for automatically milking animals, such as cows, comprising a milk unit for automatically connecting the teat cups of the machine to the teats of the cow, said milk unit being hingeably connected to the implement in such a way, that the milking machine is moveable forwards and backwards in a horizontal direction about one or more hinges extending near the upper part of the animal, **characterized in that** a robot arm construction (3) is provided with a supporting unit movable along one or more rail constructions in the longitudinal direction of the milk box (1), whereby the supporting unit (4) is pivotable.

2. An implement as claimed in claim 1, **characterized in that** there are provided at least two rail constructions.

3. An implement as claimed in claim 1 or 2, **characterized in that** the supporting unit (4) is movable along two rails (5, 6) disposed at different heights on the fencing (2) of the milk box (1).

4. An implement as claimed in claim 2, **characterized in that** one rail is disposed near a side of the fencing (2) while the other rail is disposed above the milk box (1).

5. An implement as claimed in claim 4, **characterized in that** the rail near the side of the fencing (2) is situated at a lower level than the rail which is disposed above the milk box (1).

6. An implement as claimed in claim 4 or 5, **characterized in that** the rail which is disposed above the milk box (1) is arranged approximately in the middle above the milk box (1)

7. An implement as claimed in anyone of the preceding claims, **characterized in that** there are provided rollers (9, 10) by means of which the supporting unit (4) is movable along the rails (5, 6).

8. An implement as claimed in any one of the preceding claims, **characterized in that** the supporting unit (4) is movable along the rails (5, 6) by means of a motor.

9. An implement as claimed in any one of the preceding claims, **characterized in that** the sidewardly pivotable portion (13) of the robot arm construction (3) is capable of pivoting in sideward direction relative to the milk box (1) by means of a control cylinder (20) disposed between said pivotable portion (13) and the supporting unit (4).

10. An implement as claimed in any one of the preceding claims, **characterized in that** the robot arm construction (3) comprises a carrier (14) for the robot arm (15), which carrier (14) is pivotable about the pivotal axis (16) and extends substantially downwardly.

11. An implement as claimed in claim 10, **characterized in that** the robot arm (15) is connected movably in height with the carrier (14).

12. An implement as claimed in claim 10 or 11, **characterized in that** the robot arm (15) is movable in height relative to the carrier (14) by means of a control cylinder (21) disposed between the robot arm (15) and the carrier (14).

13. An implement as claimed in any one of claims 10 to 12, **characterized in that**, parallel to the control cylinder (21) enabling the movability in height of the robot arm (15), there are provided one or more guide rods (22) for counteracting a rotating movement of the robot arm (15) relative to the carrier (14).

14. An implement as claimed in any one of the preceding claims, **characterized in that** the sidewardly pivotable portion (13) of the robot arm construction (3) is pivotable outwardly to such an extent that the robot arm (15) is located almost entirely outside the milk box (1).

15. An implement as claimed in any one of the preceding claims, **characterized in that** the pivotal axis (16) for the robot arm (15) is located approximately in the middle above the milk box (1).

16. An implement as claimed in claim 15, **characterized in that** the robot arm construction (3) is provided with a supporting unit (4) movable along at least one rail (5) in the longitudinal direction of the milk box (1), relative to which supporting unit (4) the pivotable portion (13) of the robot arm construction (3) is pivotable in sideward direction, the centre line of the rail (5) being located in a substantially vertical plane through the pivotal axis (16).

17. An implement as claimed in any one of the preceding claims, **characterized in that** the robot arm (15) is pivotable about a virtual pivotal axis (16).

18. An implement as claimed in claim 17, **characterized in that** the robot arm construction (3) is provided with a supporting unit (4) movable in the longitudinal direction of the milk box (1) along at least one rail (5, 6), as well as a quadrangle hinge construction (17) by means of which the pivotable portion (13) of the robot arm construction (3) is pivotable sidewardly relative to the supporting unit (4).

19. An implement as claimed in claim 18, **characterized in that** the rail (5, 6) is located on the side of the milk box (1) or near thereto.

20. An implement as claimed in any one of claims 1 to 12, **characterized in that** there are provided two milk boxes (1) arranged side by side, and the pivotal axis (16) for the robot arm (15) is located at the upper sides of the milk boxes (1) or near thereto and between said milk boxes (1).

21. An implement as claimed in claim 20, **characterized in that** there are provided pivoting means (30) for pivoting at least a lower part of the sidewardly pivotable portion (13) of the robot arm construction (3) around the centre line of the downwardly extending upper part of this sidewardly pivotable portion (13).

22. An implement as claimed in any one of claims 1 to 12, **characterized in that** there are provided at least two milk boxes arranged behind each other and at least one rail extending along the two milk boxes or thereabove and along which the robot arm construction (3) is movable.

23. An implement as claimed in any one of claims 1 to 12, **characterized in that** there are provided a number of milk boxes arranged in a carrousel and at least one rail extending in a circle along the carrousel or thereabove and along which the robot arm construction (3) is movable.

## Patentansprüche

1. Vorrichtung zum automatischen Melken von Tieren, wie z. B. Kühen, mit einer Melkeinheit zum automatischen Anschließen der Zitzenbecher der Maschine an die Zitzen der Kuh, wobei die Melkeinheit schwenkbar mit der Vorrichtung verbunden ist, derart, daß die Melkmaschine vorwärts und rückwärts in horizontaler Richtung um ein oder mehrere Gelenke bewegbar ist, die nahe dem oberen Teil des Tieres angeordnet sind,
**dadurch gekennzeichnet, daß** eine Roboterarm-Konstruktion (3) mit einer Trageinheit versehen ist, die auf einer oder mehreren Schienenkonstruktionen in Längsrichtung der Melkbox (1) bewegbar ist, wobei die Trageinheit (4) schwenkbar ist.

2. Vorrichtung nach Anspruch 1,
**dadurch gekennzeichnet, daß** mindestens zwei Schienenkonstruktionen vorgesehen sind.

3. Vorrichtung nach Anspruch 1 oder 2,
**dadurch gekennzeichnet, daß** die Trageinheit (4) auf zwei Schienen (5, 6) bewegbar ist, die in unterschiedlicher Höhe an der Einfassung (2) der Melkbox (1) angebracht sind.

4. Vorrichtung nach Anspruch 2,
**dadurch gekennzeichnet, daß** die eine Schiene nahe einer Seite der Einfassung (2) angebracht ist, während die andere Schiene über der Melkbox (1) angeordnet ist.

5. Vorrichtung nach Anspruch 4,
**dadurch gekennzeichnet, daß** die Schiene nahe der Seite der Einfassung (2) in einer geringeren Höhe angebracht ist als die über der Melkbox (1) angeordnete Schiene.

6. Vorrichtung nach Anspruch 4 oder 5,
**dadurch gekennzeichnet, daß** die über der Melkbox (1) angeordnete Schiene etwa in der Mitte über der Melkbox (1) angebracht ist.

7. Vorrichtung nach einem der vorhergehenden Ansprüche,
**dadurch gekennzeichnet, daß** Rollen (9, 10) vorhanden sind, mittels derer die Trageinheit (4) auf den Schienen (5, 6) bewegbar ist.

8. Vorrichtung nach einem der vorhergehenden Ansprüche,
**dadurch gekennzeichnet, daß** die Trageinheit (4) auf den Schienen (5, 6) mit Hilfe eines Motors bewegbar ist.

9. Vorrichtung nach einem der vorhergehenden Ansprüche,
**dadurch gekennzeichnet, daß** der seitwärts schwenkbare Abschnitt (13) der Roboterarm-Konstruktion (3) in seitlicher Richtung relativ zu der Melkbox (1) mit Hilfe eines Steuerzylinders (20) geschwenkt werden kann, der zwischen dem schwenkbaren Abschnitt (13) und der Trageinheit (4) angeordnet ist.

10. Vorrichtung nach einem der vorhergehenden Ansprüche,
**dadurch gekennzeichnet, daß** die Roboterarm-Konstruktion (3) einen Träger (14) für den Roboterarm (15) umfaßt, wobei der Träger (14) um die Schwenkachse (16) schwenkbar ist und sich im wesentlichen nach unten erstreckt.

11. Vorrichtung nach Anspruch 10,
**dadurch gekennzeichnet, daß** der Roboterarm (15) höhenbewegbar mit dem Träger (14) verbunden ist.

12. Vorrichtung nach Anspruch 10 oder 11,
**dadurch gekennzeichnet, daß** der Roboterarm (15) relativ zu dem Träger (14) mittels eines Steuerzylinders (21) höhenbewegbar ist, der zwischen dem Roboterarm (15) und dem Träger (14) angeordnet ist.

13. Vorrichtung nach einem der Ansprüche 10 bis 12,
**dadurch gekennzeichnet, daß** parallel zu dem Steuerzylinder (21), der die Höhebewegbarkeit des Roboterarmes (15) ermöglicht, eine oder mehrere Führungsstangen (22) vorgesehen sind, um einer Drehbewegung des Roboterarmes (15) relativ zu dem Träger (14) entgegenzuwirken.

14. Vorrichtung nach einem der vorhergehenden Ansprüche,
**dadurch gekennzeichnet, daß** der seitwärts schwenkbare Abschnitt (13) der Roboterarm-Konstruktion (3) so weit nach außen geschwenkt werden kann, daß der Roboterarm (15) nahezu vollständig außerhalb der Melkbox (1) angeordnet ist.

15. Vorrichtung nach einem der vorhergehenden Ansprüche,
**dadurch gekennzeichnet, daß** die Schwenkachse (16) für den Roboterarm (15) etwa in der Mitte über der Melkbox (1) angeordnet ist.

16. Vorrichtung nach Anspruch 15,
**dadurch gekennzeichnet, daß** die Roboterarm-Konstruktion (3) mit einer Trageinheit (4) versehen ist, die auf mindestens einer Schiene (5) in Längsrichtung der Melkbox (1) bewegbar ist, wobei der schwenkbare Abschnitt (13) der Roboterarm-Konstruktion (3) relativ zu der Trageinheit (4) in seitlicher Richtung schwenkbar ist, und wobei die Mittellinie der Schiene (5) in einer im wesentlichen vertikalen Ebene liegt, die durch die Schwenkachse (16) verläuft.

17. Vorrichtung nach einem der vorhergehenden Ansprüche,
**dadurch gekennzeichnet, daß** der Roboterarm (15) um eine gedachte Schwenkachse (16) schwenkbar ist.

18. Vorrichtung nach Anspruch 17,
**dadurch gekennzeichnet, daß** die Roboterarm-Konstruktion (3) mit einer Trageinheit (4) versehen ist, die auf mindestens einer Schiene (5, 6) in Längsrichtung der Melkbox (1) bewegbar ist, sowie mit einer Viergelenk-Schwenkvorrichtung (17), mittels der der schwenkbare Abschnitt (13) der Roboterarm-Konstruktion (3) relativ zu der Trageinheit (4) seitwärts geschwenkt werden kann.

19. Vorrichtung nach Anspruch 18,
**dadurch gekennzeichnet, daß** die Schiene (5, 6) an oder nahe der Seite der Melkbox (1) angeordnet ist.

20. Vorrichtung nach einem der Ansprüche 1 bis 12,
**dadurch gekennzeichnet, daß** zwei nebeneinander angeordnete Melkboxen (1) vorgesehen sind und die Schwenkachse (16) für den Roboterarm (15) an oder nahe den Oberseiten der Melkboxen (1) und zwischen den Melkboxen (1) angeordnet ist.

21. Vorrichtung nach Anspruch 20,
**dadurch gekennzeichnet, daß** eine Schwenkvorrichtung (30) vorgesehen ist, um zumindest einen unteren Teil des seitwärts schwenkbaren Abschnittes (13) der Roboterarm-Konstruktion (3) um die Mittellinie des sich nach unten erstreckenden oberen Teiles dieses seitwärts schwenkbaren Abschnittes (13) zu verschwenken.

22. Vorrichtung nach einem der Ansprüche 1 bis 12,
**dadurch gekennzeichnet, daß** mindestens zwei hintereinander angeordnete Melkboxen und mindestens eine Schiene vorgesehen sind, die sich entlang der beiden Melkboxen oder über diesen erstreckt und auf der die Roboterarm-Konstruktion (3) bewegbar ist.

23. Vorrichtung nach einem der Ansprüche 1 bis 12,
**dadurch gekennzeichnet, daß** mehrere in einem Karussell angeordnete Melkboxen und mindestens eine Schiene vorgesehen sind, die sich in einem Kreis entlang des Karussells oder über diesem erstreckt und auf der die Roboterarm-Konstruktion (3) bewegbar ist.

## Revendications

1. Installation de traite automatique d'animaux, tels que des vaches, comportant une unité de traite destinée à connecter automatiquement les gobelets trayeurs de la machine aux trayons de la vache, ladite unité de traite étant connectée de manière articulée à l'installation d'une manière telle que la machine de traite est mobile vers l'avant et vers l'arrière dans une direction horizontale autour d'une ou plusieurs articulations s'étendant à proximité de la partie supérieure de l'animal, **caractérisée en ce qu'**un système de bras de robot (3) est muni d'une unité de support mobile le long d'une ou plusieurs constructions de rail dans la direction longitudinale du box de traite (1), de sorte que l'unité de support (4) peut pivoter.

2. Installation selon la revendication 1, **caractérisée en ce qu'**au moins deux systèmes de rail sont fournis.

3. Installation selon la revendication 1 ou 2, **caractérisée en ce que** l'unité de support (4) est mobile le long de deux rails (5, 6) disposés à des hauteurs différentes sur la barrière (2) du box de traite (1).

4. Installation selon la revendication 2, **caractérisée en ce qu'**un premier rail est disposé à proximité d'un côté de la barrière (2), tandis que l'autre rail est disposé au-dessus du box de traite (1).

5. Installation selon la revendication 4, **caractérisée en ce que** le rail situé à proximité du côté de la barrière (2) est situé à un niveau inférieur à celui du rail qui est disposé au-dessus du box de traite (1).

6. Installation selon la revendication 4 ou 5, **caractérisée en ce que** le rail qui est disposé au-dessus du box de traite (1) est disposé approximativement au milieu au-dessus du box de traite (1).

7. Installation selon l'une quelconque des revendications précédentes, **caractérisée en ce que** des rouleaux (9, 10) sont agencés, par l'intermédiaire desquels l'unité de support (4) est mobile le long des rails (5, 6).

8. Installation selon l'une quelconque des revendications précédentes, **caractérisée en ce que** l'unité de support (4) est mobile le long des rails (5, 6) par l'intermédiaire d'un moteur.

9. Installation selon l'une quelconque des revendications précédentes, **caractérisée en ce que** la partie pouvant pivoter latéralement (13) du système de bras de robot (3) peut pivoter dans une direction latérale par rapport au box de traite (1) par l'intermédiaire d'un vérin de commande (20) disposé entre ladite partie pouvant pivoter (13) et l'unité de support (4).

10. Installation selon l'une quelconque des revendications précédentes, **caractérisée en ce que** le système de bras de robot (3) comporte un support (14) destiné au bras de robot (15), support (14) qui peuvent pivoter autour de l'axe de pivotement (16) et qui s'étend sensiblement vers le bas.

11. Installation selon la revendication 10, **caractérisée en ce que** le bras de robot (15) est connecté de manière mobile en hauteur au support (14).

12. Installation selon la revendication 10 ou 11, **caractérisée en ce que** le bras de robot (15) est mobile en hauteur par rapport au support (14) par l'intermédiaire d'un vérin de commande (21) disposé entre le bras de robot (15) et le support (14).

13. Installation selon l'une quelconque des revendications 10 à 12, **caractérisée en ce que**, parallèlement au vérin de commande (21) en permettant la mobilité en hauteur du bras de robot (15), une ou plusieurs tiges de guidage (22) sont agencées, pour empêcher un déplacement de rotation du bras de robot (15) par rapport au support (14).

14. Installation selon l'une quelconque des revendications précédentes, **caractérisée en ce que** la partie pouvant pivoter latéralement (13) de la construction de bras de robot (3) peut pivoter vers l'extérieur sur une étendue telle que le bras de robot (15) est situé presque entièrement à l'extérieur du box de traite (1).

15. Installation selon l'une quelconque des revendications précédentes, **caractérisée en ce que** l'axe de pivotement (16) du bras de robot (15) est situé approximativement au milieu au-dessus du box de traite (1).

16. Installation selon la revendication 15, **caractérisée en ce que** le système de bras de robot (3) est muni d'une unité de support (4) mobile le long d'au moins un rail (5) dans la direction longitudinale du box de traite (1), unité de support (4) par rapport à laquelle la partie pouvant pivoter (13) du système de bras de robot (3) peut pivoter dans une direction latérale, la ligne centrale du rail (5) étant située dans un plan sensiblement vertical à travers l'axe de pivotement (16).

17. Installation selon l'une quelconque des revendications précédentes, **caractérisée en ce que** le bras de robot (15) peut pivoter autour d'un axe de pivotement virtuel (16).

18. Installation selon la revendication 17, **caractérisée en ce que** le système de bras de robot (3) est muni d'une unité de support (4) mobile dans la direction longitudinale du box de traite (1) le long d'au moins un rail (5, 6), de même que d'un système d'articulation quadrangulaire (17) par l'intermédiaire duquel la partie pouvant pivoter (13) du système de bras de robot (3) peut pivoter latéralement par rapport à l'unité de support (4).

19. Installation selon la revendication 18, **caractérisé en ce que** le rail (5, 6) est situé sur le côté du box de traite (1) ou à proximité de celui-ci.

20. Installation selon l'une quelconque des revendications 1 à 12, **caractérisée en ce que** deux box de traite (1) sont fournis, disposés côte à côte, et l'axe de pivotement (16) du bras de robot (15) est situé au niveau des côtés supérieurs des box de traite (1) ou à proximité de ceux-ci, et entre lesdits box de traite (1).

21. Installation selon la revendication 20, **caractérisée en ce que** des moyens de pivotement (30) sont fournis pour faire pivoter au moins une partie inférieure de la partie pouvant pivoter latéralement (13) de la construction de bras de robot (3) autour de la ligne centrale de la partie supérieure s'étendant vers le bas de cette partie pouvant pivoter latéralement (13).

22. Installation selon l'une quelconque des revendications 1 à 12, **caractérisée en ce qu'**au moins deux box de traite sont fournis, disposés l'un derrière l'autre, et au moins un rail est fourni, s'étendant le long des deux box de traite ou au-dessus de ceux-ci, et le long duquel le système de bras de robot (3) est mobile.

23. Installation selon l'une quelconque des revendications 1 à 12, **caractérisée en ce que** plusieurs box de traite sont fournis, disposés en manège, et au moins un rail est fourni, s'étendant en cercle le long du manège ou au-dessus de celui-ci, et le long duquel le système de bras de robot (3) est mobile.
